# EUROPEAN PATENT APPLICATION

(11) **EP 3 398 751 A1**
(43) Date of publication of application: **07.11.2018**
(21) Application number: 17169157.9
(22) Date of filing: 02.05.2017
(51) Int. Cl.: B29C 64/106, B29C 64/20, B33Y 30/00, B33Y 50/02, B29C 64/393

(54) **ADDITIVE MANUFACTURING BASED ON THERMOSETTING MATERIALS**

(71) Applicant: 4D PRINT, proizvodnja in storitve, d.o.o., 1230 Domzale (SI)
(72) Inventor: pindler, Matej, 1000 Ljubljana (SI); Plestenjak, Leon, 1231 Ljubljana-Crnuce (SI)
(74) Representative: Koplin, Moritz

(57) **Abstract**

Provided is an additive manufacturing system. The system comprises a first container to receive a thermosetting resin, a second container to receive a cure control additive and a third container to receive a fill material. The system further comprises a mixer connected to the first container, the second container and the third container. The mixer is to mix the resin, the additive, and the fill material. The system further comprises a nozzle connected to the mixer, the nozzle to extrude the thermosetting material mixed by the mixer and a control unit, the control unit to dynamically control a curing speed of the thermosetting material based on a heat load factor assigned to a spot at which the thermosetting material is to be deposited.

## Description

### TECHNICAL FIELD

The present invention is directed at additive manufacturing. In particular, the present invention is directed at depositing a thermosetting material layer-by-layer.

### BACKGROUND

Additive manufacturing (which is also commonly referred to as 3D-printing) typically refers to techniques which are used to create a three-dimensional object in which material layers are successively deposited (over an optional support structure). Due to adding the material layer-by-layer, the manufactured object can be of almost any shape or geometry.

### SUMMARY

The present disclosure advances the application of known additive manufacturing techniques based on thermosetting materials to medium-sized and larger objects (e.g., objects having a dimension of more than 10 centimeters, more than 1 meter, more than 5 meters, or more than 10 meters) by accounting for, or even actively controlling the exothermic curing process, to avoid or reduce a risk of overheating. In an example, this may involve modelling the exothermic curing process and adapting the deposition of layers in terms of curing speed, layer thickness, ambient temperature, etc., as well as monitoring the temperature of the curing material during production and adapting the deposition of layers during the manufacturing process.

An additive manufacturing system that may allow to avoid overheating may comprise a first container to receive a thermosetting resin, a second container to receive a cure control additive, a third container to receive a fill material, a mixer connected to the first container, the second container and the third container, the mixer to mix the resin, the additive, and the fill material, a nozzle connected to the mixer, the nozzle to extrude the thermosetting material mixed by the mixer, and a control unit, the control unit to, dynamically control a curing speed of the thermosetting material based on a heat load factor assigned to a spot at which the thermosetting material is to be deposited.

For instance, the curing speed may be controlled by adapting a percentage of the cure control additive within the thermosetting material. Moreover, the system may additionally comprise a heater and/or a cooler to heat/cool the ingredients/mixture before, during, or after the ingredients are mixed. In this regard, it is noted that a higher temperature of the thermosetting material will typically result in a higher curing speed, while a lower temperature will typically result in a lower curing speed.

Furthermore, it is noted that the enumerations "first", "second", etc., as used throughout the specification and claims are primarily used to ease discrimination between entities without, however, necessarily indicating that a certain number of different entities exists. For instance, a reference to a "second" entity does not (necessarily) mean that must also be a first entity within the same device or system, although this may be the case. Rather, referring to an entity as the "second entity" allows to unambiguously reference the second entity in cases where other (similar or identical) entities are described throughout the disclosure.

Moreover, the term "thermosetting material" as used throughout the specification and claims, in particular refers to a material comprising a prepolymer such as a thermosetting resin, which may be in a soft solid or viscous liquid state that changes irreversibly into an infusible, insoluble polymer network by curing. The term "container" as used throughout the specification and claims, in particular refers to a reservoir or a storage tank for storing a fluid or a solid (e.g., a powder).

Furthermore, the term "cure control additive" as used throughout the specification and claims, in particular refers to chemical additives which accelerate or decelerate the curing speed, e.g., a hardener or accelerator. For instance, cure control additives may be reaction catalysts, bonding and crosslinking agents which produce or inhibit free radicals. In addition, the term "curing" as used throughout the specification and claims, in particular refers to a process resulting in solidification of the cured material, e.g., by cross-linking through the formation of strong covalent bonds between individual chains of a polymer.

The term "fill material" (or filler) as used throughout the specification and claims, in particular refers to alumina, silicates, glass (e.g., expanded glass beads), and simple salts which can be added to the prepolymer, and which after curing are embedded in the thermoset material. Moreover, the term "mixer" as used throughout the specification and claims, in particular refers to a device for increasing homogeneity of a suspension or blend of different materials such as, for example, a twin-screw extruder pump.

Furthermore, the term "nozzle" as used throughout the specification and claims, in particular refers to a device for applying a fluid layer (such as a paste layer) of substantially uniform thickness onto a surface. In addition, the term "heat load factor" as used throughout the specification and claims, in particular refers to data which indicates an amount of thermosetting material that may be deposited per area and an amount of heat per time and mass that the thermosetting material may generate. In other words, the term "heat load factor" is to indicate a maximum amount of heat that a layer deposited on the spot may produce without causing material at the spot to overheat. The tolerable heat load may depend on how much heat can be dissipated from the spot, as well as a temperature limit imposed by the deposited thermosetting material (which may also not exceed a temperature limit of materials adjacent the deposited thermosetting material).

Accordingly, the system allows adapting the curing speed of the thermosetting material by dynamically controlling the recipe of the thermosetting material and in particular an amount of cure control additive within the thermosetting material. For instance, increasing the percentage of the cure control additive within the thermosetting material (e.g., more hardener or more curing accelerator) may result in a faster curing speed and more heat being generated during curing within a given amount of time.

Hence, a thermosetting material which is deposited on a spot in a region where a relatively large amount of uncured material is present and which is thus likely to overheat if a fast curing thermosetting material is used, may be controlled to cure more slowly, for example, by adding only a relatively low percentage of the cure control additive or by reducing the temperature of the thermosetting material. In other words, the curing speed of the thermosetting material may be reduced, e.g., by diminishing a percentage of the cure control additive within the thermosetting material, in cases where otherwise overheating is to be expected.

The heat load factor may be based on one or more of
a) parameters describing an amount of heat generated by uncured material within a region around the spot,
b) an amount of uncured material within a region around the spot,
c) a temperature of uncured material within a region around the spot,
d) a curing speed of uncured material within a region around the spot,
e) a temperature in an environment of uncured material within a region around the spot,
f) a thermal conductivity of material within a region around the spot, and
g) geometry data of an object which is to be additively manufactured, stored on a storage of the control unit.

The system may further comprise a temperature sensor, wherein the temperature sensor is to measure a temperature at the spot. For instance, the system may comprise one or more infrared (IR) cameras which are to capture images of the object surface. Moreover, the control unit may be configured to combine multiple images to derive a 3D temperature model.

For example, if the temperature of a curing thermosetting material layer is higher or is about to become higher than an expected temperature value, the curing speed or the thermal conductivity of the next layer may be reduced to avoid overheating of the curing material. Moreover, the layer may be cooled and/or adding the next layer may be delayed.

The system may further comprise a fourth container to receive a second cure control additive, wherein the cure control additive is to allow for a higher or lower curing speed than the second cure control additive, wherein the mixer is connected to the first container, the second container, the third container and the fourth container, and is to mix the first resin, a combination of the additive and the second additive, and the first fill material, and wherein the control unit is to dynamically control the percentage of the cure control additive and a percentage of the second cure control additive within the extruded thermosetting material based on the heat load factor assigned to the spot where the thermosetting material is to be deposited.

The system may further comprise a fifth container to receive a second fill material, wherein the second fill material is to have different mechanical properties than the fill material, a second mixer connected to the fifth container, the second mixer to mix a thermosetting resin, an additive, and the second fill material, and a second nozzle connected to the second mixer, the second nozzle to extrude the thermosetting material mixed by the second mixer, wherein the control unit is to control the extrusion of the thermosetting material by the nozzles, wherein the control unit is to use the first nozzle for depositing thermosetting material layers on a first portion of an object to be manufactured, and to use the second nozzle for depositing thermosetting material layers on a second portion of the object.

The second mixer may be connected to the first container and the second container, and the second mixer may be to mix the resin, the additive, and the second fill material.

Accordingly, different fill materials may be used, resulting in different material properties such as, for example, different material hardness and density. For instance, the fill material may be added to provide a thermosetting material having a hardness of more than 40 shore D and a density of higher than 50 kg/m³ and the second fill material may be added to provide a thermosetting material having a density of below 8000 kg/m³.

The system may be used in an additive manufacturing method which comprises depositing thermosetting material layers comprising the resin, the additive, and the fill material, on an object to be additively manufactured.

The system may further comprise a third nozzle, the third nozzle to extrude a curable foam, wherein structure formed by the cured foam may serve as a support for the deposited thermosetting material layers.

For example, the curable foam may support bridges or cantilevered sections of the thermosetting materials. Hence, the curable foam may be deposited layer-by-layer and once cured, the thermosetting materials mixed within the first or second mixer may be deposited onto the cured foam. As the cured foam may be less dense that the thermosetting materials extruded via the first and second nozzle, an amount of the to be disposed or recycled material may be reduced as compared to cutting said material from the object or machining openings into the object. Moreover, the foam may have a lower hardness than the thermosetting materials which may reduce time and labor required for removing the cured foam from the object.

In order to determine process parameters that avoid or reduce a risk of overheating the thermosetting material, a computer-readable medium may be provided that comprises computer-readable instructions which if carried out by a processor cause the processor to analyze a geometry of a three-dimensional model of an object, assign a first heat score to a first solid portion of the object, wherein the first heat score is based on a first thermal conductivity and a first curing speed of a first thermosetting material assigned to the first solid portion, and assign a second heat score to a second solid portion of the object, wherein the second heat score is based on a second thermal conductivity and a second curing speed of a second thermosetting material assigned to the second solid portion.

Accordingly, a heat map may be generated which indicates portions of the object to be manufactured that may suffer from overheating if no adverse action is taken. For instance, the heat scores may quantify expected temperatures within the solid portions during curing of the thermosetting materials. In particular, a heat score map may be assigned to some or all layers of the object, wherein the heat score map is based on the thermal conductivities, the curing speeds of the thermosetting materials and the local thickness of the respective layer.

The computer-readable medium may further comprise computer-readable instructions which if carried out by the processor cause the processor to adapt or modify process parameters to avoid or reduce a risk of overheating the thermosetting material, or to arrive at a more uniform distribution of heat within the deposited thermosetting material layers.

Hence, by carrying out the computer-readable instructions, process parameters may be determined which when applied during production avoid or reduce a risk of overheating the thermosetting material. Moreover, the process parameters may reduce temperature differences throughout the object which may otherwise impose thermal stress on the object.

The computer-readable medium may further comprise computer-readable instructions which if carried out by the processor cause the processor to assign a third thermosetting material to the first solid portion, the third thermosetting material having a third thermal conductivity and a third curing speed, wherein the third curing speed differs from the first curing speed and/or the third thermal conductivity differs from the first thermal conductivity.

Accordingly, a different thermosetting material may be assigned to a portion, if otherwise overheating of the thermosetting material is to be expected. For instance, the first and third thermosetting material may be made of a same thermosetting resin but differ in regard to a type or a percentage of a cure control additive added to the thermosetting resin. In addition, or alternatively, the first and third thermosetting material may differ in regard to a type or a percentage of fill material added to the thermosetting resin. For instance, a higher percentage of fill material may increase a thermal conductivity of the thermosetting material.

The computer-readable medium may further comprise computer-readable instructions which if carried out by the processor cause the processor to simulate an additive manufacturing process, wherein the first and second solid portions of the model are manufactured layer-by-layer, wherein the heat scores are based on the simulated process.

For example, the simulated process may take into account a speed at which, and a path along which the nozzles are driven for depositing the thermosetting material layers. In particular, the simulated process may be fed with data provided by a slicer and determine a path along the slices.

The computer-readable medium may further comprise computer-readable instructions which if carried out by the processor cause the processor to change a speed at which one or more layers are added to the first or second solid portion and re-calculate the heat scores of the solid portions, change an order at which one or more layers are added to the first or second solid portion and re-calculate the heat scores of the solid portions, change a thickness of one or more layers are added to the first or second solid portion and re-calculate the heat scores of the solid portions, and/or change an environmental temperature at surfaces of the solid portions and re-calculate the heat scores of the solid portions.

Hence, the simulation may be iteratively performed, while process parameters may be modified between or during simulations to arrive at a process parameter set which avoids or reduces a risk of overheating the thermosetting material.

A method of additive manufacturing of an object may comprise determining a three-dimensional model of the object, depositing a thermosetting material layer-by-layer in accordance with the determined model to additively manufacture the object, monitoring a temperature of a first portion of the object, formed by deposited material, and if the temperature is above or is to become higher than an upper threshold, reducing a speed at which a thermosetting material which is deposited on the first portion cures, reducing a speed at which a layer is deposited on the first portion, reducing a frequency at which layers are deposited on the first portion, reducing a thickness of layers deposited on the first portion, increasing a thermal conductivity of the thermosetting material deposited on the first portion, reducing a temperature of the thermosetting material deposited on the first portion, and/or reducing a temperature at a surface of the first portion.

Thus, overheating of the area can be prevented by reducing the heat produced within the close vicinity of the area such that an amount of heat that can be removed from the area matches the exothermic reaction taking place.

Reducing the curing speed of the material, which is deposited on the first portion, may comprise changing a percentage of one or more cure control additives within the material and/or reducing a temperature of the material.

For instance, by producing fewer radicals within the thermosetting material due to using less of the cure control additive, a reaction speed may be kept below a threshold which allows to remove the produced heat from the first portion without overheating the thermosetting material. Moreover, reducing the temperature of the thermosetting material may also slow down the curing process.

The method may further comprise analyzing the three-dimensional model and assigning thermosetting materials of different curing speeds to different portions of the model, wherein a first thermosetting material having a first curing speed is assigned to the first portion having dimensions which are larger than a second portion, and wherein a second thermosetting material assigned to the second portion has a higher curing speed than the first thermosetting material.

Accordingly, process parameters which are likely to avoid overheating may be determined at a process planning stage while actual temperature monitoring during the process may ensure that deviations from the expected behavior can be detected and adequately compensated.

The method may comprise assigning a third thermosetting material having a third curing speed lower than the first curing speed, to the first portion if the temperature is above or is to become higher than an upper threshold.

Thus, another recipe as planned may be used to cover for an unexpected temperature level. For instance, by mixing two compatible hardeners, a continuous range of cure times may be achieved.

### BRIEF DESCRIPTION OF THE DRAWINGS

The foregoing aspects and many of the attendant advantages of this document will become more readily appreciated as the same becomes better understood by reference to the following detailed description, when taken in conjunction with the accompanying drawings, wherein like reference numerals refer to like parts throughout the various views, unless otherwise specified.
Fig. 1 schematically illustrates a cross-sectional view of an object formed of two different thermosetting materials on a support structure made of cured foam;
Fig. 2 schematically illustrates an additive manufacturing system comprising three nozzles for manufacturing the object shown in Fig. 1;
Fig. 3 schematically illustrates a first mixer and containers of the system of Fig. 2;
Fig. 4 schematically illustrates a second mixer and a further container of the system of Fig. 2;
Fig. 5 shows a flow-chart of the process; and
Fig. 6 schematically illustrates a computing device to pre-compute parameters of the process.

### DETAILED DESCRIPTION

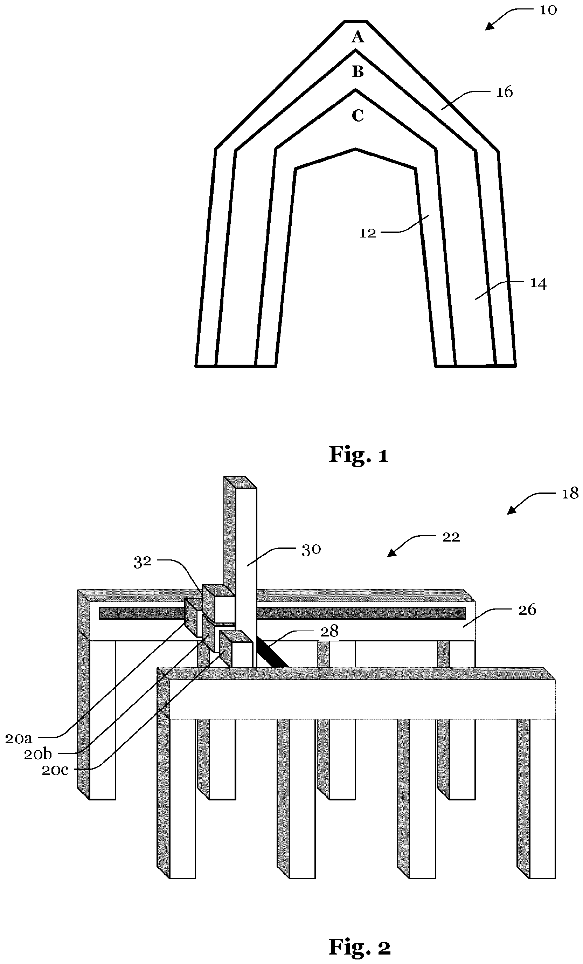

Fig. 1 schematically illustrates a cross-sectional view of an object 10 (i.e., a hull of a boat or ship) formed of two different thermosetting materials 14, 16 which are deposited on a support structure made of cured foam 12. As shown, the support structure may allow depositing the thermosetting materials 14, 16 on a flat or inclined bed without the need for any additional customized support structures. During production, the curable foam 12 may be deposited layer-by-layer before or concurrently with the deposition of layers of the thermosetting materials 14, 16.

For instance, the deposition of layers of the curable foam 12 and the deposition of layers of the thermosetting materials 14, 16 may be interleaved such that, for example, one or more layers of the curable foam 12 are deposited first, followed by one or more layers of the thermosetting materials 14, 16, with the process to be continued by depositing one or more further layers of the curable foam 12. Hence, instead of finishing deposition of the curable foam 12 and then depositing the thermosetting materials 14, 16, layers of different materials may be deposited concurrently or successively in an alternating fashion.

The thermosetting materials 14, 16 may be selected to be compatible with later work stages (e.g. routing, coating, polishing, etc.) while having a suitable dimensional stability, both during depositing and curing. Moreover, the thermosetting materials 14, 16 may be selected to exhibit a desired dimensional stability once cured. The selected thermosetting materials 14, 16 may further be of a relatively low density, so as to reduce a risk of deformations under the material's own weight during curing. The thermal expansion coefficient of the thermosetting materials 14, 16 may also be taken into account and may preferably be relatively low to avoid deformation during the curing. Furthermore, the thermosetting materials 14, 16 may be treated to be substantially free of air bubbles, so as to allow being deposited and cured in an evacuated atmosphere.

The thermosetting materials 14, 16 may comprise a resin, such as a two-component epoxy resin, as well as fill materials (fillers), such as, for example, expanded glass beads or milling dust which may be available after machining a previously produced object. The two-component epoxy resin may provide for acceptable mechanical performance, sufficient thermal stability, the possibility to control the curing speed, a suitable adhesion between deposited layers, and a low tendency to trap air bubbles. Moreover, the epoxy resin may exhibit favorable properties in relation to succeeding work stages. Furthermore, the glass filler may enhance the mechanical properties, the resistance to high temperatures, the thermal expansion coefficient, and the mean density of the material. Further, the individual components of the thermosetting materials 14, 16 may be selected to be suitable for feeding them (via pumps) through ducts of lengths which may exceed 100 m.

Fig. 2 schematically illustrates an additive manufacturing system 18. The system 18 comprises three nozzles 20a-20c, although the system 18 may also comprise only two nozzles 20a-20c or a single nozzle. For example, the system 18 may be enabled to deposit different thermosetting materials 14, 16 (material A and material B) through the nozzles 20a, 20b or through a single "hybrid" nozzle (not shown). Moreover, if a support structure is required, the system 18 may be enabled to also deposit a curable foam (material C) layer-by-layer, wherein the cured foam 12 is to serve as the support structure 12. However, the system 18 may also be enabled to deposit only one of the thermosetting material 14, 16 at a time.

As shown in Fig. 2, the nozzles 20a-20c may be mounted to a frame 24 which permits a three-dimensional movement of the nozzles 20a-20c within a production area. The movement of the nozzles 20a-20c may be carried out by a robotic installation, which may allow, for example, a Cartesian, delta or polar movement. For instance, the robotic installation may allow the attachment and usage of different tools such as the nozzles 20a-20c, a routing tool, a finishing tool to allow different production steps, such as additive and subtractive production steps, to be sequentially performed by a single machine.

The movement may be controlled by a drive unit based on computer-readable instructions derived from a 3D model of the object 10. For instance, the frame 24 may comprise two stands 26 which support a crossbeam 28. The crossbeam 28 supports a boom 30, wherein the nozzles 20a-20c are attached to the boom 30. The system 18 may further comprise a temperature sensor 32 such as, for example, one or more infrared cameras for monitoring a temperature of the deposited thermosetting material 14, 16.

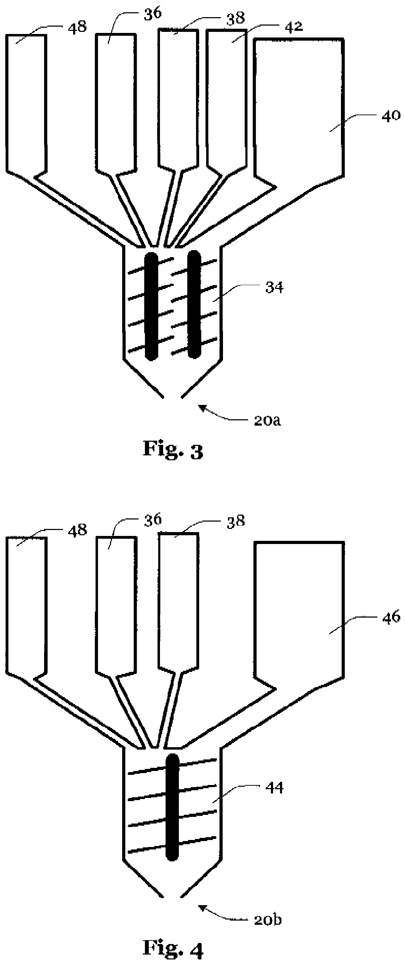

Fig. 3 schematically illustrates a first mixer 34 and a multitude of thermosetting material component containers 36-42 of the system 18 of Fig. 2. The first container 36 may be filled with a first thermosetting resin. The second container 38 may be filled with a first cure control additive, which causes a relatively fast reaction speed when mixed with the thermosetting resin. The third container 40 may store a relatively fine fill material and (optionally) additional additives. The fourth container 42 may be filled with a second cure control additive, which causes a relatively slow reaction speed when mixed with the thermosetting resin.

Fig. 4 schematically illustrates a second mixer 44 and a fifth thermosetting material component container 46 of the system 18 of Fig. 2. The fifth container 46 may store a relatively coarse fill material, which is directed at the production of a thermosetting material of a density which is lower than 8.000 kg/m³. As shown in Fig. 3 and 4 both mixers 34, 44 are connected to the first container 36 storing the thermosetting resin, and to the second container 38 storing the first cure control additive, as well as to a solvent container 48, wherein the solvent stored in the solvent container 48 allows pausing the curing process of the thermosetting material 14, 16 when added thereto. However, the first mixer 34 may be also connected to the fourth container 42 storing the second cure control additive which gives additional freedom for controlling the reaction speed of the thermosetting material 14.

Material A may be mixed inside the first mixer 34 or the second mixer 44 (which may be placed in the immediate proximity of the nozzles 20a, 20b). The mixers 34, 44 may be self-cleaning, such as a self-cleaning twin screw pump 34 as shown in Fig. 3 or a single screw pump 44 as shown in Fig. 4. The liquid components of the thermosetting materials 14, 16 may be fed to the mixers 34, 44 by hydraulic pumps (not shown). The solid components may be fed either by a pump and/or by a gravity dosing device. The mixing chambers may be heated in order to control the viscosity of the thermosetting materials 14, 16 and the reaction speed. Moreover, the thermosetting resin and the cure control additives may be pre-heated or pre-cooled when still being outside the mixing chambers (such as in the respective containers 36-40) in order to ensure precise dosing. Moreover, the thermosetting resin and the cure control additives may be post-heated after they are mixed to increase the reaction speed, or post-cooled to reduce the reaction speed.

The dosage (percentage) of the different thermoset material components making up material A may be controlled in accordance with pre-computed process parameters determined on basis of the geometry of the object 10, and/or in accordance with feedback provided by the one or more temperature sensors 32. By adapting the dosage of the different components of the thermosetting material 16, a production of slow-reacting mixes (e.g. suitable for large or thick-walled sections) and fast-reacting mixes (e.g. suitable for thin or small sections) may be achieved that avoids thermosetting material overheating. For instance, the dosage of the components of the thermosetting material 16 may allow the setting of the resin's gel time to be anywhere between, for example, 15 minutes and 24 hours.

Material B may be mixed inside the second mixer 44 (which may be placed in the immediate proximity of the second nozzle 20b). As stated above, the second mixer 44 may be a self-cleaning mixer such as a, for example, a single screw mixer as shown in Fig. 4 (or a self-cleaning double-screw mixer 34 as shown in Fig. 3). Material B may be of lower density than Material A, yet geometrically stable to act as a backing material and support for Material A. If the system is to produce a support structure to support larger horizontal unsupported geometries, Material C may be deposited onto the bed. The components of Material C may be selected to build up a relatively strong and fast-curing foam (upon exit from the nozzle), allowing the construction of larger unsupported structures of Material A or Material B on Material C.

The process parameters which are to be observed to avoid that the thermosetting materials 14, 16 overheat, may be determined in advance or while the deposition of thermosetting materials 14, 16 is taking place. In particular, the process parameters may prescribe the path along which the nozzles 20a-20c are to be moved, as well as the speed of the movement of the nozzles 20a-20c along the path. For example, computer instructions implementing a process to determine the process parameters may be part of the system 18 or may be executed remotely. The process may be based on a 3D model of the object 10. In particular, the process may involve analyzing the model and calculating a ratio between (or percentages of) the components of the thermosetting material 16 to be deposited, as well as suitable curing speeds in relation to different areas of the object 10. This may result in a more uniform heating of the object 10 during production, as it allows (partially) compensating an influence of a local wall thickness of the object 10 on the heating of the thermosetting material 14, 16.

In particular, the process may involve the following process parameters:
For Material A:
   The dosage of the thermosetting resin and the first and second cure control additives to control the curing speed and the expected temperature in the walls of the object 10 to be produced.
For materials A and B:
   The wall thickness at various areas within the model.
For all Materials:
   The layer thickness.
   The extrusion speed.
   The nozzle speed.

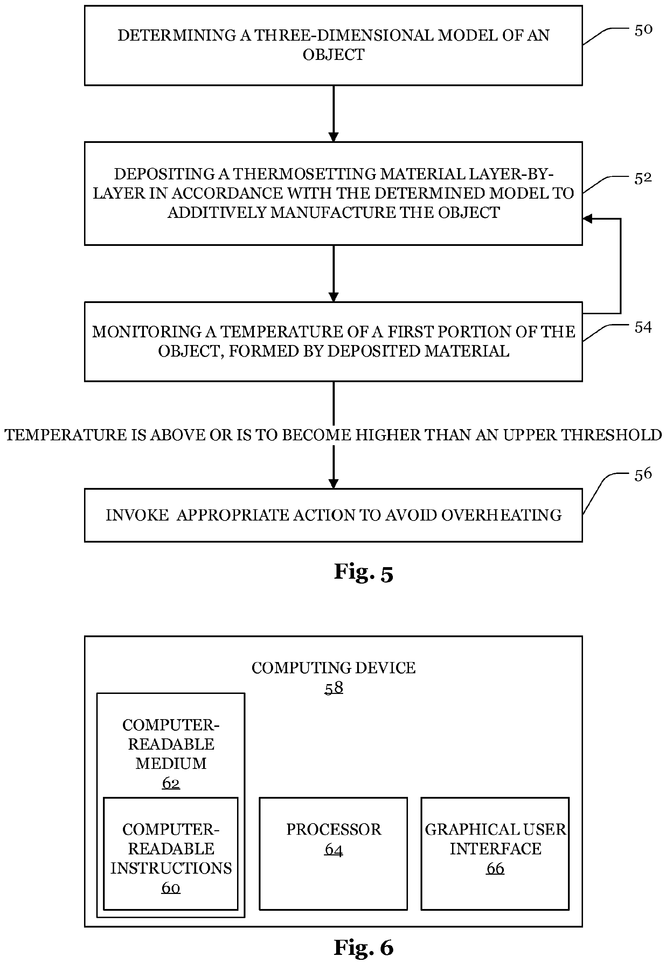

The process may strive to identify the optimal process parameters, based on different materials available. The process parameters, besides determining the movement of the nozzles, may also control valves, heating elements, pumps, etc. If temperature measurements are available, the measurements may be used to identify the temperature in the deposited layers. A closed loop feedback system may allow the mixers 34, 44 to deviate from the previously set mixing ratios in order to further improve the temperature and control the reaction speed on a local level as illustrated in the flowchart of Fig. 5. Moreover, the reaction speed may also be adapted by using cooling air jets or other cooling devices.

Producing the object 10 may thus be free of any human labor, other than the loading of the components in the apparatus, the loading of a 3D model in a slicer, the setting of some process parameters and the preparation of a clean flat or inclined bed within a work envelope of the system 18. To substantially reduce a risk of arriving at situations where overheating may occur, the additive manufacturing process may be analyzed and/or simulated using a computing device 58 as schematically depicted in Fig. 6.

The computing device 58 may comprise computer-readable instructions 60 stored on a computer-readable medium 62. The computer-readable instructions 60 may, if carried out by the processor 64, cause the processor 64 to analyze a geometry of a three-dimensional model (e.g., based on a mesh) of the object 10 and assign first heat scores to the object 10, wherein the heat scores identify critical portions of the object 10. The heat scores may be available to a user through the graphical user interface 66 for inspection, to allow the user to modify the geometry of the object 10 and the process parameters. Moreover, the process parameters may be adapted automatically based on simulation/optimization of the additive manufacturing process. This may allow to even the heat scores so as to arrive at a substantially uniform temperature strain of the object 10 during curing of the thermosetting material.

## Claims

1. An additive manufacturing system (18), comprising:
a first container (36) to receive a thermosetting resin;
a second container (38) to receive a cure control additive;
a third container (40) to receive a fill material;
a mixer (34) connected to the first container (36), the second container (38) and the third container (40), the mixer (34) to mix the resin, the additive, and the fill material;
a nozzle (20a) connected to the mixer (34), the nozzle (20a) to extrude the thermosetting material mixed by the mixer (34); and
a control unit, the control unit to dynamically control a curing speed of the thermosetting material based on a heat load factor assigned to a spot at which the thermosetting material is to be deposited.

2. The system (18) of claim 1, wherein the heat load factor is based on one or more of:
parameters describing an amount of heat generated by uncured material within a region around the spot;
an amount of uncured material within a region around the spot;
a temperature of uncured material within a region around the spot;
a curing speed of uncured material within a region around the spot;
a temperature in an environment of uncured material within a region around the spot;
a thermal conductivity of material within a region around the spot; and
geometry data of an object which is to be additively manufactured, stored on a storage of the control unit.

3. The system (18) of claims 1 or 2, comprising:
a temperature sensor (32), wherein the temperature sensor (32) is to measure a temperature at the spot.

4. The system (18) of any one of claims 1 to 3, comprising:
a fourth container (42) to receive a second cure control additive, wherein the cure control additive is to allow for a higher or lower curing speed than the second cure control additive;
wherein the mixer (34) is connected to the first container (36), the second container (38), the third container (40) and the fourth container (42), and is to mix the first resin, a combination of the additive and the second additive, and the first fill material; and
wherein the control unit is to dynamically control the percentage of the cure control additive and a percentage of the second cure control additive within the extruded thermosetting material based on the heat load factor assigned to the spot where the thermosetting material is deposited.

5. The system (18) of any one of claims 1 to 4, comprising
a fifth container (46) to receive a second fill material, wherein the second fill material is to have different mechanical properties than the fill material;
a second mixer (44) connected to the fifth container (46), the second mixer (44) to mix a thermosetting resin, an additive, and the second fill material; and
a second nozzle (20b) connected to the second mixer (44), the second nozzle (20b) to extrude the thermosetting material mixed by the second mixer (44);
wherein the control unit is to control the extrusion of the thermosetting material by the nozzles (20a, 20b), wherein the control unit is to
use the first nozzle (20a) for depositing thermosetting material layers on a first portion of an object to be manufactured; and
use the second nozzle (20b) for depositing thermosetting material layers on a second portion of the object.

6. The system of claim 5, wherein the second mixer (44) is connected to the first container (36) and the second container (38), and is to mix the resin, the additive, and the second fill material.

7. A method of additive manufacturing of an object using the system (18) of any one of claims 1 to 6, the method comprising:
depositing thermosetting material layers comprising the resin, the additive, and the fill material on an object (10) to be additively manufactured.

8. The method of claim 7, wherein the system comprises a third nozzle (20c), the third nozzle (20c) to extrude a curable foam, wherein a cured foam structure serves as a support for the deposited thermosetting material layers.

9. A computer-readable medium (62), comprising computer-readable instructions (60) which if carried out by a processor (64) cause the processor (64) to:
analyze a geometry of a three-dimensional model of an object (10);
assign a first heat score to a first solid portion of the object, wherein the first heat score is based on a first thermal conductivity and a first curing speed of a first thermosetting material assigned to the first solid portion; and
assign a second heat score to a second solid portion of the object, wherein the second heat score is based on a second thermal conductivity and a second curing speed of a second thermosetting material assigned to the second solid portion.

10. The computer-readable medium (62) of claim 9, wherein the heat scores quantify expected temperatures within the solid portions during curing of the thermosetting materials.

11. The computer-readable medium (62) of claim 9 or 10, comprising computer-readable instructions (60) which if carried out by the processor (64) cause the processor (64) to:
assign a third thermosetting material to the first solid portion, the third thermosetting material having a third thermal conductivity and a third curing speed, wherein the third curing speed differs from the first curing speed and/or the third thermal conductivity differs from the first thermal conductivity.

12. The computer-readable medium (62) of any one of claims 9 to 11, comprising computer-readable instructions (60) which if carried out by the processor (64) cause the processor (64) to:
simulate an additive manufacturing process, wherein the first and second solid portions of the model are manufactured layer-by-layer;
wherein the heat scores are based on the simulated process.

13. The computer-readable medium (62) of claim 12, comprising computer-readable instructions (60) which if carried out by the processor (64) cause the processor (64) to:
change a speed at which one or more layers are added to the first or second solid portion and re-calculate the heat scores of the solid portions;
change an order at which one or more layers are added to the first or second solid portion and re-calculate the heat scores of the solid portions;
change a thickness of one or more layers are added to the first or second solid portion and re-calculate the heat scores of the solid portions; and/or
change an environmental temperature at surfaces of the solid portions and re-calculate the heat scores of the solid portions.

14. A method of additive manufacturing of an object, the method comprising:
determining (50) a three-dimensional model of the object;
depositing (52) a thermosetting material layer-by-layer in accordance with the determined model to additively manufacture the object;
monitoring (54) a temperature of a first portion of the object, formed by deposited material; and
if the temperature is above or is to become higher than an upper threshold:
reducing a speed at which the thermosetting material which is deposited on the first portion cures;
reducing a speed at which a layer is deposited on the first portion;
reducing a frequency at which layers are deposited on the first portion;
reducing a thickness of layers deposited on the first portion;
increasing a thermal conductivity of the thermosetting material deposited on the first portion;
reducing a temperature of the thermosetting material deposited on the first portion; and/or
reducing a temperature at a surface of the first portion.

15. The method of claim 14, wherein reducing the curing speed of the material, which is deposited on the first portion, comprises:
changing a percentage of one or more cure control additives within the material; and/or
reducing a temperature of the material.
